# EUROPEAN PATENT APPLICATION

(11) **EP 4 378 983 A1**
(43) Date of publication of application: **05.06.2024**
(21) Application number: 22210805.2
(22) Date of filing: 01.12.2022
(51) Int. Cl.: C08J 7/14, C08J 11/24, C07C 217/08, C08G 59/06, C08J 5/04

(54) **METHOD OF PRODUCING A WIND TURBINE BLADE AND RESPECTIVELY PRODUCED WIND TURBINE BLADE AS WELL AS COMPOUNDS SUITABLE FOR USE IN THE PRODUCTION**

(71) Applicant: Siemens Gamesa Renewable Energy A/S, 7330 Brande (DK)
(72) Inventor: Stecher, Harald, 9520 Skørping (DK); Jensen, Jonas Pagh, 9200 Aalborg SV (DK); Maennchen, Jakob, 9000 Aalborg (DK)
(74) Representative: SGRE-Association

(57) **Abstract**

A method of producing a wind turbine blade or a part thereof is described, the method comprising providing a mold containing a compound having a chemical structure of general formula I or of general formula II (depicted below), applying a resin into the mold, and curing the resin. In addition, a respectively produced wind turbine blade or a part thereof, a method of recycling a wind turbine blade or a part thereof and compounds that may be used in the production of a wind turbine blade or a part thereof, in particular as flow regulators and/or hot melt adhesives, are described. 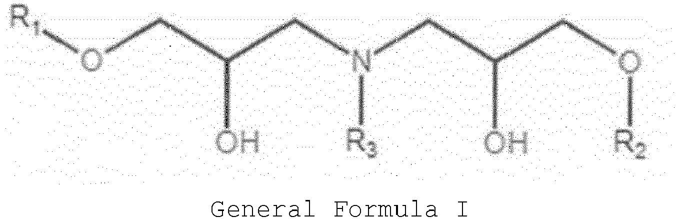 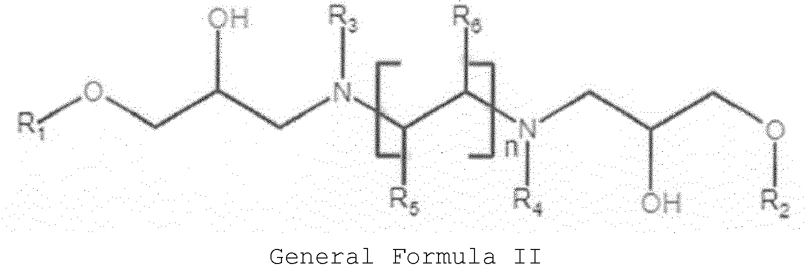 wherein
R¹, R², R³, R⁴, R⁵ and R⁶ independently from each other represent a linear or branched, saturated or unsaturated, substituted or unsubstituted alkyl group; a linear or branched, saturated or unsaturated, substituted or unsubstituted heteroalkyl group; a saturated or unsaturated, substituted or unsubstituted cycloalkyl group; a saturated or unsaturated, substituted or unsubstituted heterocycloalkyl group; a substituted or unsubstituted aryl group; a substituted or unsubstituted heteroaryl group; a linear or branched, substituted or unsubstituted aralkyl group; or a linear or branched, substituted or unsubstituted alkaryl group; and
n represents an integer of from 1 to 10.

## Description

### Field of invention

The present invention relates to the field of wind turbine blades, in particular to a method of producing a wind turbine blade or a part thereof and a respectively produced wind turbine blade or a part thereof as well as a method of recycling a wind turbine blade or a part thereof. Moreover, the present invention relates to compounds that may be used in the production of a wind turbine blade or a part thereof, in particular as flow regulators and/or hot melt adhesives.

### Art Background

Wind power is considered one of the cleanest, most environmentally friendly energy sources presently available, and wind turbines have gained increased attention for utilizing this energy source. A modern wind turbine typically includes a tower, generator, gearbox, nacelle, and one or more rotor blades. The rotor blades capture kinetic energy of wind and transmit the kinetic energy in the form of rotational energy so as to turn a shaft coupling the rotor blades to a gearbox or directly to the generator. The generator then converts the mechanical energy to electrical energy that may be fed into a power grid.

Over the years and in terms of sustainability, recycling of wind turbines becomes a more and more important topic. In particular, the recycling of wind turbine blades is still an unmet issue. The most widely used technology to produce wind blades, especially longer blades, is the resin infusion technology. In the resin infusion technology, fiber materials are typically placed in a mold, and resin is infused under pressure into a mold cavity comprising the fibre and optionally core material. Thus, wind turbine blades are fabricated using fibre reinforced composites possibly comprising balsa and/or foam core materials. The composites used in this case are typically glass, carbon or aramid fibres reinforced in a resin such as an epoxy or polyester, and these resins are difficult to recycle as they most commonly are thermoset resins and are not re-mouldable. Accordingly, besides reuse of the resin, reuse of fibre material and/or core material such as balsa or foam core material have proven difficult, if not impossible, as the thermoset resin used is difficult to separate from such blade materials.

Recently, a resin technology for manufacturing wind turbine blades has been introduced based on acetal or ketal groups in the crosslinks of the thermoset resin network which allows the chemical cleavage and recycling under mild (acidic) conditions. However, conventionally there are materials in the blade besides the fibre layers and optional core materials, such as flow regulators placed in the lay-up or adhesives in the blade, that cannot be degraded and dissolved together with the bulk resin. If fibres and optionally core material used in the blade layup, flow regulators e.g. in the shape of a mesh, fleece, felt or veil may be placed below such materials and/or in-between layers of such materials e.g. between layers in a fibre layer stacked arrangement. In fact, no adhesives and flow regulators are used so far that are compatible to and dissolvable in a recycling process. Rather, materials that do not degrade in a controlled way during the recycling process are conventionally used. These materials can contaminate the recovered polymer(s) and complicate the separation and the further processing of the recovered materials. It would be desired to avoid this issue and/or improve on the overall percentage rate of the components used in the blade that can be recycled.

Thus, there may be a need for adhesives and flow regulators that may degrade, such as dissolve, in a controlled way during the recycling process of an acetal or ketal based recyclable resin, thereby allowing a substantially complete recycling of wind turbine blades, which would not only be advantageous in terms of sustainability, but may also reduce process costs in the recycling process and may allow the reuse of the recovered materials.

### Summary of the Invention

This need may be met by the subject matter according to the independent claims. Advantageous embodiments of the present invention are described by the dependent claims.

According to an aspect of the invention, there is provided a method of producing a wind turbine blade or a part thereof, the method comprising providing a mold (having a cavity) containing (in its interior) a compound having a chemical structure of general formula I or of general formula II (depicted below), applying (e.g. injecting) a resin (in particular an infusion resin) into the mold, and curing (hardening) the (infusion) resin; 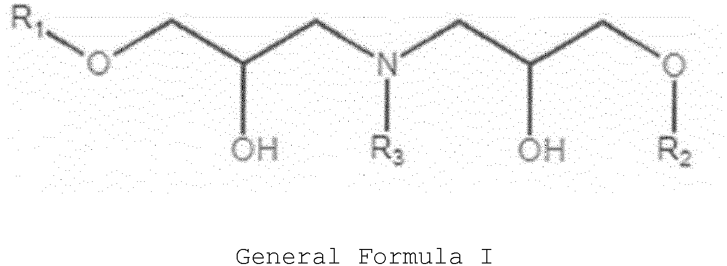 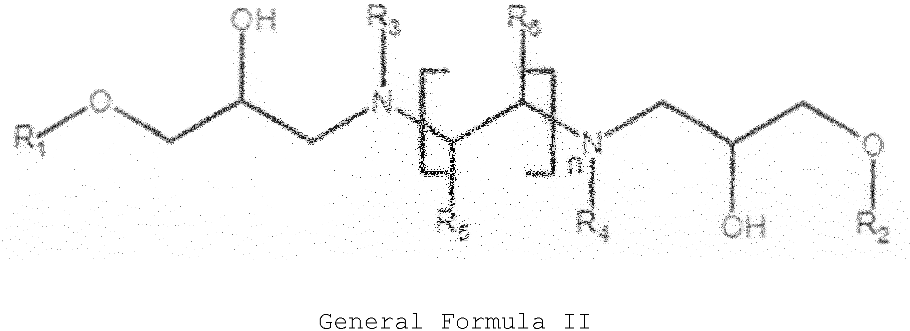 wherein
R¹, R², R³, R⁴, R⁵ and R⁶ independently from each other represent a linear or branched, saturated or unsaturated, substituted or unsubstituted alkyl group; a linear or branched, saturated or unsaturated, substituted or unsubstituted heteroalkyl group; a saturated or unsaturated, substituted or unsubstituted cycloalkyl group; a saturated or unsaturated, substituted or unsubstituted heterocycloalkyl group; a substituted or unsubstituted aryl group; a substituted or unsubstituted heteroaryl group; a linear or branched, substituted or unsubstituted aralkyl group; or a linear or branched, substituted or unsubstituted alkaryl group; and
n represents an integer of from 1 to 10.

According to a further aspect of the invention, there is provided a (recyclable, in particular substantially completely recyclable) wind turbine blade or a part thereof obtainable (or obtained) by a method as described herein.

According to a further aspect of the invention, there is provided the use of a compound having a chemical structure of general formula I or of general formula II (depicted above) as a flow regulator for an infusion resin.

According to still a further aspect of the invention, there is provided a method of recycling a wind turbine blade or a part thereof, in particular a wind turbine blade or a part thereof as described herein, the method comprising contacting the wind turbine blade or the part thereof (such as placing the wind turbine blade or the part thereof in a bath of an acidic aqueous liquid) with an acidic aqueous liquid comprising an acid at a temperature in a range of from 70°C to 100°C and/or for a period of from 1 h to 10 h (such that the wind turbine blade or the part thereof is degraded and the dissolvable part of the wind turbine blade or the part thereof is substantially completely dissolved).

These aspects of the invention are in particular based on the idea that specific compounds having a chemical structure of general formula I or of general formula II as described herein are suitable for use as a flow regulator (e.g. a flow promoting material or a flow restricting material) and/or as an adhesive in the production of a wind turbine blade. Moreover, these compounds may degrade, such as dissolve, in a controlled way during the recycling process of an acetal or ketal based recyclable resin (such as under mild (acidic) conditions at elevated temperature), thereby allowing a substantially complete recycling of wind turbine blades and reuse of the materials.

### Detailed Description

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a method of producing may be combined with any other exemplary embodiment of a method of producing and with any exemplary embodiment of a wind turbine blade and with any exemplary embodiment of a use and with any exemplary embodiment of a method of recycling and vice versa, unless specifically stated otherwise.

Where an indefinite or definite article is used when referring to a singular term, such as "a", "an" or "the", a plural of that term is also included and vice versa, unless specifically stated otherwise.

The expression "comprising", as used herein, includes not only the meaning of "comprising", "including" or "containing", but may also encompass "consisting essentially of" and "consisting of".

Unless specifically stated otherwise, the expression "at least partially", "at least a partial" or "at least (a) part of", as used herein, may mean at least 5 % thereof, in particular at least 10 % thereof, in particular at least 15 % thereof, in particular at least 20 % thereof, in particular at least 25 % thereof, in particular at least 30 % thereof, in particular at least 35 % thereof, in particular at least 40 % thereof, in particular at least 45 % thereof, in particular at least 50 % thereof, in particular at least 55 % thereof, in particular at least 60 % thereof, in particular at least 65 % thereof, in particular at least 70 % thereof, in particular at least 75 % thereof, in particular at least 80 % thereof, in particular at least 85 % thereof, in particular at least 90 % thereof, in particular at least 95 % thereof, in particular at least 98 % thereof, and may also mean 100 % thereof.

In a first aspect, a method of producing a wind turbine blade or a part thereof comprises providing a mold containing (in its interior) a compound having a chemical structure of general formula I or of general formula II, applying (injecting) a resin (in particular an infusion resin) into the mold, and curing (hardening) the (infusion) resin;

The mold typically forms a cavity and may therefore also be designated as mold cavity. The mold may be adapted to an outline of the turbine blade or the part thereof to be produced. For instance, the mold may be designed as a blade half shell or a part thereof.

In an embodiment, a compound having a chemical structure of general formula I or of general formula II as described in further detail below may be arranged or placed in an interior of the mold.

The compound of general formula I has the following chemical structure: 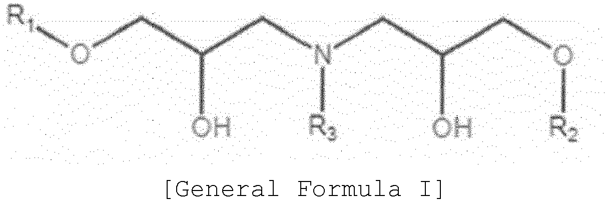 and the compound of general formula II has the following chemical structure: 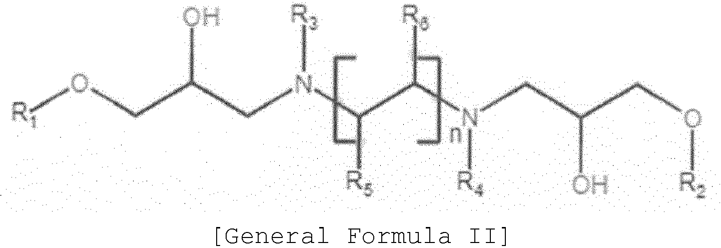 wherein
R¹, R², R³, R⁴, R⁵ and R⁶ independently from each other represent a linear or branched, saturated or unsaturated, substituted or unsubstituted alkyl group; a linear or branched, saturated or unsaturated, substituted or unsubstituted heteroalkyl group; a saturated or unsaturated, substituted or unsubstituted cycloalkyl group; a saturated or unsaturated, substituted or unsubstituted heterocycloalkyl group; a substituted or unsubstituted aryl group; a substituted or unsubstituted heteroaryl group; a linear or branched, substituted or unsubstituted aralkyl group; or a linear or branched, substituted or unsubstituted alkaryl group; and
n represents an integer of from 1 to 10.

The meaning of the terms "linear", "branched", "saturated", "unsaturated" and "unsubstituted", as used herein, corresponds to the respective well-established meanings thereof, as known to a person skilled in the art. The term "substituted", as used herein, means that one or more, in particular 1, 2, 3, 4, 5, 6, 7, 8, 9 or 10, hydrogen atom(s) of the respective groups are substituted by a substituent. Examples of suitable substituents, include halogen atoms, such as -F, - Cl, -Br, -I; -OH, hydroxyalkyl groups (ether), -SH, thioalkyl groups (thioether), =O, carboxyl groups (-COOH) and salts, esters and amides thereof, -NH₂, secondary amine groups, tertiary amine groups, nitrile groups, nitro groups, alkyl groups, heteroalkyl groups, cycloalkyl groups, heterocycloalkyl groups, aryl groups and heteroaryl groups. If two or more substituents are present, they may be the same or different and they may be bound to each other to form a ring. The terms "heteroalkyl group", "heterocycloalkyl group" or "heteroaryl group", respectively, represents an alkyl group, a cycloalkyl group or an aryl group, respectively, wherein one or more, in particular 1, 2, 3, 4, 5, 6, 7, 8, 9 or 10, carbon atom(s) are replaced by a hetero atom, such as O, N or S, in particular O and/or N. If more than one hetero atom is contained in a group, these hetero atoms may be the same or different.

Suitable examples of the alkyl group include C₁ to C₂₀ alkyl groups, in particular C₂ to C₁₀ alkyl groups, in particular C₃ to C₈ alkyl groups, in particular C₄ to C₆ alkyl groups.

Suitable examples of the cycloalkyl group include C₃ to C₂₀ cycloalkyl groups, in particular C₄ to C₁₅ cycloalkyl groups, in particular C₅ to C₁₀ cycloalkyl groups, in particular C₆ to C₈ cycloalkyl groups.

Suitable examples of the aryl group include C₆ to C₂₀ aryl groups, in particular C₆ to C₁₆ aryl groups, in particular C₆ to C₁₄ aryl groups, in particular C₆ to C₁₀ aryl groups. In particular, the aryl group may be a phenyl group.

An "aralkyl group", as used herein, denotes a group having an aliphatic and an aromatic moiety, wherein the aliphatic moiety binds to the oxygen atom or nitrogen atom, respectively, of the respective compounds represented by general formulas (I) or (II), and wherein the aromatic moiety and/or the aliphatic moiety may optionally comprise a hetero atom. In other words, an "aralkyl group" represents an alkyl or cycloalkyl group (or a heteroalkyl or heterocycloalkyl group) having an aryl group (or a heteroaryl group) as a substituent. Suitable aliphatic and aromatic moieties of the aralkyl group correspond to the alkyl, cycloalkyl and aryl groups (or heteroalkyl, heterocycloalkyl and heteroaryl groups, respectively), as defined above.

An "alkaryl group", as used herein, denotes a group having an aliphatic and an aromatic moiety, wherein the aromatic moiety binds to the oxygen atom or nitrogen atom, respectively, of the respective compounds represented by general formulas (I) or (II), and wherein the aliphatic moiety and/or the aromatic moiety may optionally comprise a hetero atom. In other words, an "alkaryl group" represents an aryl group (or a heteroaryl group) having an alkyl or cycloalkyl group (or a heteroalkyl or heterocycloalkyl group) as a substituent. Suitable aliphatic and aromatic moieties of the alkaryl group correspond to the alkyl, cycloalkyl and aryl groups (or heteroalkyl, heterocycloalkyl and heteroaryl groups, respectively), as defined above.

In an embodiment, R¹ and/or R² comprises - together with the oxygen atom to which R¹ and/or R² binds - a bisphenol moiety, such as a bisphenol A moiety and/or a bisphenol F moiety, butanediol, hexanediol, neopentanediol, C12-C14 alcohol, 2-ethylhexan-2-ol, fatty alcohols (such as C14-C26 alcohol) and/or cardanol.

In an embodiment, one or more of R³, R⁴, R⁵ and R⁶ comprises hydrogen, methyl, ethyl, n-propyl, isopropyl and/or a linear or branched hydroxyalkyl group.

In the general formula (II), "n" represents an integer of from 1 to 10, in particular 1 to 5, in particular 1 to 3, such as 1 or 2.

In an embodiment, the compound of general formula I may be synthesized by reaction of a difunctional epoxy resin (i.e. containing two epoxy groups) and a monofunctional primary amine compound (which can react with two epoxy groups) in accordance with the following reaction scheme:

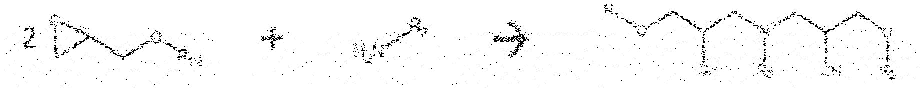

In another embodiment, the compound of general formula I may also be recovered from the recycling of acetal or ketal containing epoxy-amine resins, as exemplified in the following reaction scheme:

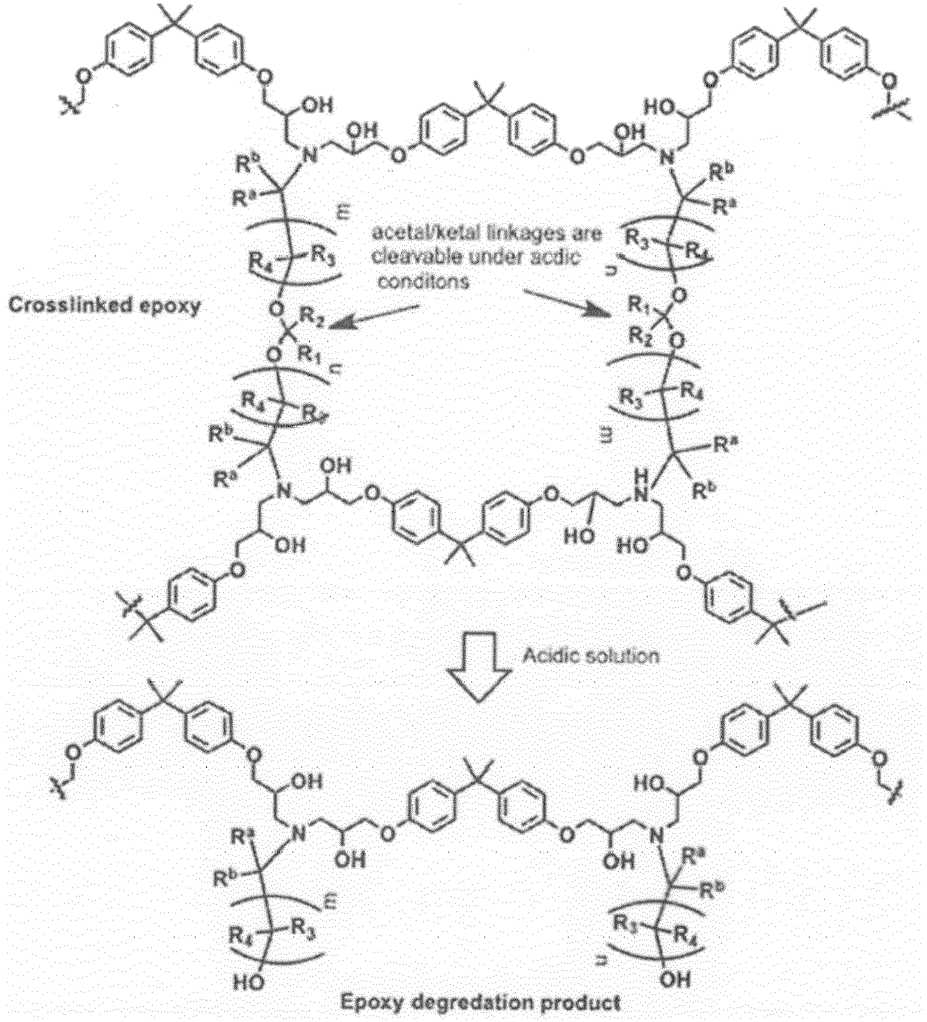

In an embodiment, the compound of general formula II may be synthesized by reaction of a difunctional epoxy resin (i.e. containing two epoxy groups) and a difunctional secondary amine compound (wherein each amine group can react with one epoxy group) in accordance with the following reaction scheme:

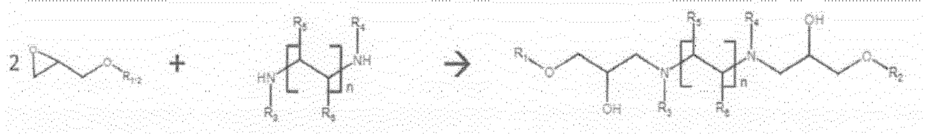

In an embodiment, a mixture of the above mentioned components may be used, such as a mixture of a compound of general formula I and a compound of general formula II or a mixture of the above mentioned educts.

In an embodiment, when synthesizing the compound of general formula I and/or the compound of general formula I, in addition to the difunctional epoxy resin (i.e. containing two epoxy groups), a monofunctional epoxy resin (i.e. containing only one epoxy group) may be added as well in order to control the molecular wight of the polymer chains (in particular terminate the polymer chain growth).

In an embodiment, the compound having a chemical structure of general formula I or of general formula II is a thermoplastic material, i.e. has thermoplastic properties. The term "thermoplastic", as used herein, denotes that the material becomes pliable or moldable at a certain elevated temperature and solidifies upon cooling, in contrast to a thermosetting material.

In an embodiment, the compound having a chemical structure of general formula I or of general formula II is present (for instance has been placed in the mold or applied into the mold) in the form (has the shape) of at least one selected from the group consisting of a film, a mesh, a fabric, a fleece (non-woven), a veil and a felt. It might be advantageous that the compound having a chemical structure of general formula I or of general formula II is present not in powdery or particulate form, but has a particular shape, such as the shape of a film, a mesh, a fabric, a fleece (non-woven), a veil or a felt, in order to exert its desired function (e.g. as an adhesive and/or as a flow regulator) during the production of a wind turbine blade or a part thereof. The production of these particular shapes, such as film, mesh, fleece or veil, can be done by standard processing techniques for thermoplastic materials, such as extrusion or melt spinning. For instance, a fleece, a veil or a felt may be produced by melt spinning and a film or fibers (which may then be further processed to a mesh or a fabric) may be obtained by extrusion.

In an embodiment, the compound having a chemical structure of general formula I or of general formula II or a material based on this chemistry may be used as a flow regulator and/or as an adhesive, in particular a hot melt adhesive. A flow regulator may include a flow promoting material (i.e. a material increasing the flow of a resin, for instance an infusion resin) as well as a flow restricting material (i.e. a material decreasing the flow of a resin, for instance an infusion resin). The regulation of the flow may be important for avoiding or at least suppressing the occurrence of race tracks when applying an infusion resin. Race tracks are areas and spaces in the lay-up with reduced resistance towards the infusion resin. The resin flows much faster in these spaces and as a result can cause air inclusions and reduced part quality. Race tracks can be caused by wrong design, curved shapes including stiff materials in the lay-up, wrinkles in the materials or vacuum bag, bad sealing along the sides etc.

In an embodiment, the compound having a chemical structure of general formula I or of general formula II has a coverage, e.g. of the inner surface of the mold, of less than 50%, in particular less than 40%, in particular less than 30%, in particular less than 20%. The term "coverage", as used herein, denotes the ratio between the area (e.g. of the inner surface of the mold) covered by the material versus the area (e.g. of the inner surface of the mold) uncovered by the material (i.e. the area of open space between). Having such a relatively low coverage, which may result in a high permeability in-plane and through plane, the compound having a chemical structure of general formula I or of general formula II may represent a flow promoting (enhancing, improving, increasing) material. To this end, it might be advantageous, if the thickness of a mesh, a fleece, a felt or a veil made from the compound having a chemical structure of general formula I or of general formula II is higher than 1 mm and/or if the compound having a chemical structure of general formula I or of general formula II is a non-compressible material.

In an embodiment, the compound having a chemical structure of general formula I or of general formula II has a coverage (e.g. of the inner surface) of the mold of more than 50%, in particular more than 60%, in particular more than 70%. Having such a relatively high coverage, the compound having a chemical structure of general formula I or of general formula II may represent a flow restricting (suppressing, reducing) material. To this end, it might be advantageous, if the thickness of a mesh, a fleece, a felt or a veil made from the compound having a chemical structure of general formula I or of general formula II is higher than 1 mm and/or if the compound having a chemical structure of general formula I or of general formula II is a compressible material.

In an embodiment, the method further comprises, in particular after the step of applying the infusion resin into the mold, heating the compound having a chemical structure of general formula I or of general formula II to a temperature in the range of from 80 to 200 °C, in particular 100 to 180 °C, in particular 120 to 160 °C. By taking this measure, the compound having a chemical structure of general formula I or of general formula II may be used as an adhesive, in particular a hot melt adhesive.

In an embodiment, in particular in the precedent embodiment, the compound having a chemical structure of general formula I or of general formula II is present in the form of at least one selected from the group consisting of a mesh, a fleece, and a veil, wherein the mesh, the fleece and/or the veil fulfills at least one of the following features: a thickness of 100 µm or less, in particular 50 µm or less, and/or a surface weight (mass per unit area) of 75 g/m² or less, in particular 50 g/m² or less, in particular 25 g/m² or less, and/or a coverage of the mold of less than 50%, in particular less than 20%. By taking this measure, the compound having a chemical structure of general formula I or of general formula II may be particularly suitable for use as an adhesive, in particular a hot melt adhesive.

In an embodiment, the step of applying a resin into the mold comprises a step of injecting an infusion resin into the mold, for instance by means of a vacuum infusion method. In the context of the present specification, the term "vacuum infusion method" may in particular denote a molding technique wherein a liquid or flowable resin is injected in a mold under application of vacuum. In particular, vacuum assisted resin transfer molding (VARTM) may be used. The infusion resin may in particular be a liquid or flowable composition comprising components, typically at least two different types of components, that may react with each other to thereby form a cured or hardened product.

In an embodiment, the (infusion) resin comprises an epoxy amine (infusion) resin (epoxy-amine-based resin or epoxy-based resin). An epoxy amine resin may for instance comprise an epoxy component and an amine component.

In an embodiment, the (infusion) resin contains a cleavable functional group, in particular at least one of an acetal and a ketal functional group. In the context of the present application, the term "cleavable functional group" may particularly denote a functional group having a covalent bond that may be cleaved under certain conditions (e.g. temperature, pH value, reagent). For instance, the cleavable functional group may in particular be an acid-cleavable functional group, i.e. a functional group having a covalent bond that may be cleaved by an acid or under acidic conditions (pH of less than 7).

In an embodiment, the (infusion) resin comprises an epoxy amine (infusion) resin containing a cleavable functional group, in particular at least one of an acetal and a ketal functional group. Commercially available examples thereof are based on Recyclamine^{®} (from Aditya Birla Chemicals) or Cleavamine^{®} (from Adesso Advanced Materials) technology for instance.

In an embodiment, the curing (or hardening) of the infusion resin is not particularly limited and, depending on the type of infusion resin, may take place at room temperature or at elevated temperatures (i.e. may involve heating).

In an embodiment, the method further comprises, after curing the infusion resin, removing the produced wind turbine blade or the part thereof from the mold.

In a further aspect, a (recyclable, in particular substantially completely recyclable) wind turbine blade or a part thereof is obtainable or is obtained by a method as described in the foregoing. The compound having a chemical structure of general formula I or of general formula II used for producing the wind turbine blade (or the part thereof) may still be contained in and form part of the thus obtained wind turbine blade (or the part thereof). In fact, the compound having a chemical structure of general formula I or of general formula II may degrade, such as dissolve, in a controlled way during the recycling process of an acetal or ketal based recyclable resin (such as under mild (acidic) conditions at elevated temperature), thereby allowing a substantially complete recycling of wind turbine blades and reuse of the materials.

In a further aspect, a compound having a chemical structure of general formula I or of general formula II is used as a flow regulator for an infusion resin.

In an embodiment, the compound having a chemical structure of general formula I or of general formula II is used as a flow promoting (enhancing, improving, increasing) material (i.e. a material increasing the flow of an infusion resin). To this end, the compound having a chemical structure of general formula I or of general formula II has a coverage (of an inner surface) of a mold of less than 50%, in particular less than 40%, in particular less than 30%, in particular less than 20%.

In another embodiment, the compound having a chemical structure of general formula I or of general formula II is used as a flow restricting (suppressing, reducing) material (i.e. a material decreasing the flow of a resin, for instance an infusion resin). To this end, the compound having a chemical structure of general formula I or of general formula II has a coverage (of an inner surface) of a mold of more than 50%, in particular more than 60%, in particular more than 70%.

As discussed above, the regulation of the flow of an infusion resin may be important for avoiding or at least suppressing the occurrence of race tracks when applying the infusion resin.

In a further aspect, a method of recycling a wind turbine blade or a part thereof, in particular a wind turbine blade or a part thereof as described herein, comprises contacting the wind turbine blade or the part thereof with an acidic aqueous liquid comprising an acid at an elevated temperature over the ambient temperature such as at a temperature in a range of from 70°C to 100°C and/or for a period of from 1 h to 10 h (such that the wind turbine blade or the part thereof is degraded and the dissolvable part of the wind turbine blade or the part thereof is substantially completely dissolved). Depending on the size of the blade or blade part, such blade or blade part may also be separated into smaller pieces (parts) for handling purposes. By example, separation by mechanical means including cutting or shredding, thereby dividing the process into several intermediate steps.

In an embodiment, the step of contacting the wind turbine blade or the part thereof with an acidic aqueous liquid comprising an acid comprises a placing the wind turbine blade or the part thereof in a bath of an acidic aqueous liquid. Alternatively, the wind turbine blade or the part thereof to be recycled may also be sprayed or contacted in another way with an acidic aqueous liquid comprising an acid.

In an embodiment, the acidic aqueous liquid has a pH value of less than 7, in particular of less than 6, in particular of less than 5, in particular of less than 4. Moreover, the acidic aqueous liquid may have a pH value of more than 0, in particular of more than 1.

In an embodiment, the acid is preferably an organic acid or a carboxylic acid, rather than a mineral acid. An organic acid or a carboxylic acid may not only be particularly suitable for adjusting an appropriate pH but may additionally also act as a solvent for the recyclate.

In an embodiment, the acid comprises a monocarboxylic acid, a dicarboxylic acid, a tricarboxylic acid and/or a polycarboxylic acid, in particular selected from the group consisting of acetic acid, lactic acid, citric acid, oxalic acid and tartaric acid. Combinations of two or more of these acids are suitable as well. In particular, the acid may comprise acetic acid, which has proven particularly suitable.

In an embodiment, the wind turbine blade or the part thereof to be recycled is contacted with an acidic aqueous liquid comprising an acid (e.g. 20-30% acetic acid) at a temperature in a range of from 70°C to 100°C, such as from 80°C to 90°C, and/or for a period of from 1 h to 10 h, such as from 3 h to 6 h.

In an embodiment, the wind turbine blade or the part thereof to be recycled comprises or is made of a resin containing a cleavable functional group, in particular at least one of an acetal and a ketal functional group. As a result of the contacting step, the wind turbine blade or the part thereof, at least part of the cleavable functional groups of the resin are cleaved such that the cleaved resin gets (becomes) dissolved in the acidic aqueous liquid. Simultaneously, the compound having a chemical structure of general formula I or of general formula II dissolves as well in the acidic aqueous liquid and may form a substantially homogenous blend or mixture with the cleaved resin enabling a recovery of a compound having a chemical structure of general formula I.

The invention or the embodiments of the invention described in this document can be descriptively summarized as follows:
The flow promoting or restricting materials and adhesives used in the lay-up (e.g. to increase flow, reduce race tracks or consolidate preforms) are based on linear polymers based on epoxy-amine type chemistry, so with thermoplastic properties. The material is of similar or same chemistry as the thermoplastic recyclate material that can be recovered from recycling of ketal or acetal based resins.

The new flow materials and adhesives are based on a chemical structure of general formula I or of general formula II. The compound having a chemical structure of general formula I may be recovered from the recycling of acetal or ketal containing epoxy-amine resins (hence the starting materials used may be cleaved to provide new chemical entities) or may be synthesized by reaction of difunctional epoxy resin and monofunctional primary amine hardener (can react with 2 epoxy groups). The compound having a chemical structure of general formula II may be synthesized by the reaction of difunctional epoxy resin and difunctional secondary amine hardener (each amine can react with one epoxy group) and can contain heteroatoms in the backbone and side chains. It can also be a mixture of the above-mentioned components. On top of the difunctional epoxy resin also monofunctional epoxy resin can be added to control the molecular weight of the polymer chains.

The specific chemical structure described above allows to dissolve the adhesive layer of flow material together with the bulk blade matrix (infusion resin and repair resin) in a recycling process based on acidic solvolysis. Examples for infusion resin and repair resin technologies compatible with the invention are e.g. commercially available products Recyclamine and Cleavamine, but not limited to these only.

The preferred form of the product is film, mesh, fabric, fleece, veil or felt. For mesh, fleece and veil for adhesive use the thickness shall not exceed 100 um, better 50 um or below, and a weight of 75 g/m² and preferred 25 g/m² or below with a coverage (or cover factor) of less than 50 %, preferred less than 20 % to achieve high permeability in-plane and through plane. The production of film, mesh, fleece or veil can be done by standard processing techniques for thermoplastic materials like extrusion or melt spinning.

For use as flow regulator, the thickness and aerial weight of mesh, fleece, felt or veil can be higher with 1 mm and more. The flow promoting material shall be non-compressible and have a coverage of less than 50 %, preferred less than 20 % to achieve high permeability in-plane and through plane, the flow restricting material shall have a coverage of above 50 % and be compressible. Potential manufacturing techniques for fleece, veil or felt can be melt spinning but not limited to it, fibers and films can be manufactured by extrusion. Coverage is the ratio between area covered by material vs. area of open space between.

The film, fleece, veil etc. may be applied in the blade during lay-up process and before infusion. The resin system used for infusion should be recyclable under acidic conditions and at elevated temperatures, for example Recyclamine based infusion resins. After the end of life of the blade, the composite structure can be recycled under acidic conditions. The flow materials and adhesive layers dissolve under these conditions together with the resin and becomes part of the recovered thermoplastic material of general formula I. To the extend the wind turbine blade comprises fibre material and, optionally, core materials e.g. balsa or foam core materials, which usually is the case, these materials can be isolated and re-used in subsequent wind turbine blade manufacture or for other purposes where they see fit.

While the present invention has been described in detail by way of specific embodiments and examples, it should be appreciated the invention is not limited thereto and various alterations and modifications are possible, without departing from the scope of the invention.

## Claims

1. A method of producing a wind turbine blade or a part thereof, the method comprising:
providing a mold containing a compound having a chemical structure of general formula I or of general formula II depicted below,
applying a resin into the mold,
curing the resin; 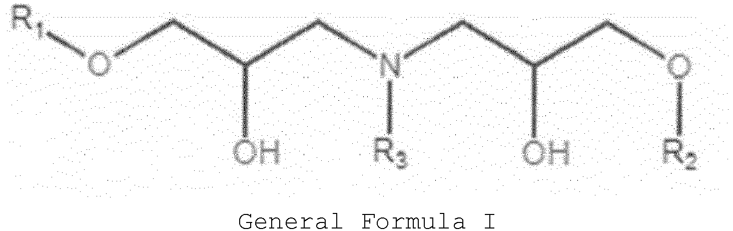 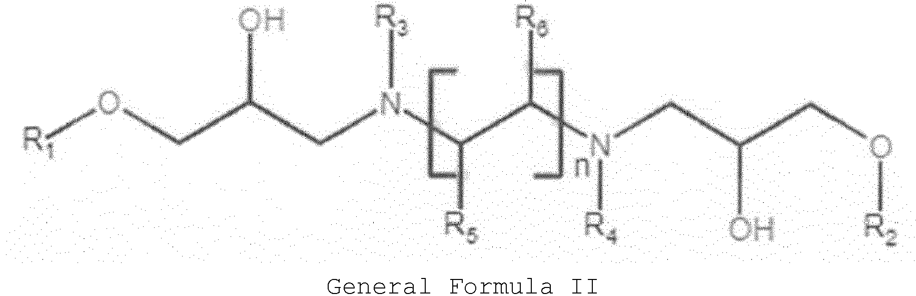
wherein
R¹, R², R³, R⁴, R⁵ and R⁶ independently from each other represent a linear or branched, saturated or unsaturated, substituted or unsubstituted alkyl group; a linear or branched, saturated or unsaturated, substituted or unsubstituted heteroalkyl group; a saturated or unsaturated, substituted or unsubstituted cycloalkyl group; a saturated or unsaturated, substituted or unsubstituted heterocycloalkyl group; a substituted or unsubstituted aryl group; a substituted or unsubstituted heteroaryl group; a linear or branched, substituted or unsubstituted aralkyl group; or a linear or branched, substituted or unsubstituted alkaryl group; and
n represents an integer of from 1 to 10.

2. The method as set forth in claim 1, wherein the compound having a chemical structure of general formula I or of general formula II is present in the form of at least one selected from the group consisting of a film, a mesh, a fabric, a fleece, a veil and a felt.

3. The method as set forth in any one of the preceding claims, wherein the compound having a chemical structure of general formula I or of general formula II has a coverage of the mold of less than 50%, in particular less than 20%.

4. The method as set forth in any one of claims 1 or 2, wherein the compound having a chemical structure of general formula I or of general formula II has a coverage of the mold of more than 50%.

5. The method as set forth in any one of the preceding claims, further comprising, in particular after the step of applying the infusion resin into the mold, heating the compound having a chemical structure of general formula I or of general formula II to a temperature in the range of from 80 to 200 °C, in particular 100 to 180 °C.

6. The method as set forth in claim 5,
wherein the compound having a chemical structure of general formula I or of general formula II is present in the form of at least one selected from the group consisting of a mesh, a fleece, and a veil,
wherein the mesh, the fleece and/or the veil has a thickness of 100 µm or less, in particular 50 µm or less, and/or a surface weight of 75 g/m² or less, in particular 25 g/m² or less.

7. The method as set forth in any one of the preceding claims, wherein the resin comprises an epoxy amine resin.

8. The method as set forth in any one of the preceding claims, wherein the resin contains a cleavable functional group, in particular at least one of an acetal and a ketal functional group.

9. The method as set forth in any one of the preceding claims, wherein the method further comprises, after curing the infusion resin, removing the mold.

10. A wind turbine blade or a part thereof obtainable by a method according to any one of claims 1 to 9.

11. Use of a compound having a chemical structure of general formula I or of general formula II depicted below as a flow regulator for an infusion resin; 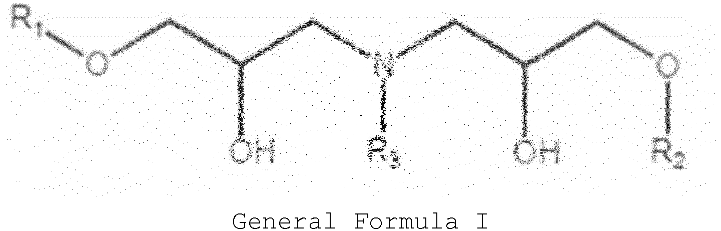 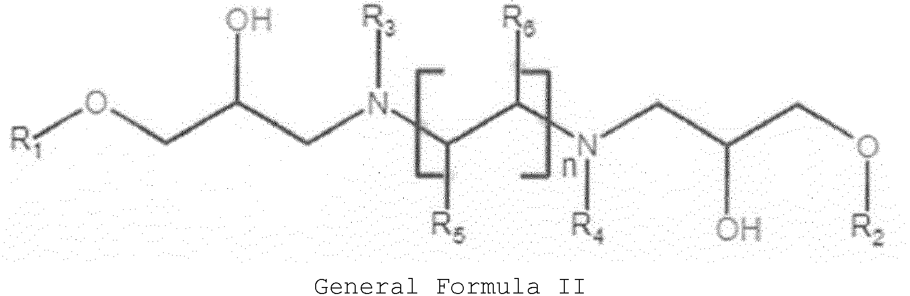 wherein
R¹, R², R³, R⁴, R⁵ and R⁶ independently from each other represent a linear or branched, saturated or unsaturated, substituted or unsubstituted alkyl group; a linear or branched, saturated or unsaturated, substituted or unsubstituted heteroalkyl group; a saturated or unsaturated, substituted or unsubstituted cycloalkyl group; a saturated or unsaturated, substituted or unsubstituted heterocycloalkyl group; a substituted or unsubstituted aryl group; a substituted or unsubstituted heteroaryl group; a linear or branched, substituted or unsubstituted aralkyl group; or a linear or branched, substituted or unsubstituted alkaryl group; and
n represents an integer of from 1 to 10.

12. The use as set forth in claim 11, wherein the compound is used as a flow promoting material.

13. The use as set forth in claim 11, wherein the compound is used as a flow restricting material.

14. A method of recycling a wind turbine blade or a part thereof, in particular a wind turbine blade or a part thereof as set forth in claim 10, the method comprising:
contacting the wind turbine blade or the part thereof with an acidic aqueous liquid comprising an acid at an elevated temperature which is elevated compared to ambient temperature, for instance a temperature in a range of from 70°C to 100°C, and/or for a period of from 1 h to 10 h.

15. The method as set forth in claim 14, wherein the acid comprises at least one selected from the group consisting of acetic acid, lactic acid, citric acid, oxalic acid and tartaric acid.
